# EUROPEAN PATENT SPECIFICATION

(11) **EP 4 678 352 B1**
(45) Date of publication and mention of the grant of the patent: **25.11.2026**
(21) Application number: 24860072.8
(22) Date of filing: 10.06.2024
(51) Int. Cl.: G05D 1/2285, G05D 1/242, B25J 13/00, B25J 5/00, B25J 13/08, B25J 19/02, G10L 15/00

(54) **ROBOT AND METHOD FOR CONTROLLING SAME**
ROBOTER UND VERFAHREN ZUR STEUERUNG DAVON
ROBOT ET SON PROCÉDÉ DE COMMANDE

(30) Priority: 30.08.2023 KR 20230114914
(43) Date of publication of application: 14.01.2026
(73) Proprietor: Samsung Electronics Co., Ltd, Suwon-si, Gyeonggi-do 16677 (KR)
(72) Inventor: KIM, Taehan, Suwon-si, Gyeonggi-do 16677 (KR); KIM, Saeyoung, Suwon-si, Gyeonggi-do 16677 (KR); KIM, Yongkook, Suwon-si, Gyeonggi-do 16677 (KR); KIM, Junghoe, Suwon-si, Gyeonggi-do 16677 (KR); MOON, Boseok, Suwon-si, Gyeonggi-do 16677 (KR); LIM, Hyeontaek, Suwon-si, Gyeonggi-do 16677 (KR)
(74) Representative: Gulde & Partner
(86) International application number: PCT/KR2024/007917
(87) International publication number: WO 2025/048147

(56) References cited:
- WO-A1-2019/138619
- JP-A- 2015 081 831
- JP-A- 2016 048 464
- JP-A- 2016 048 464
- KR-A- 20000 066 728
- KR-A- 20090 038 697
- KR-A- 20210 045 131
- SHEN SHENG SSHEN19@ILLINOIS EDU ET AL: "Voice localization using nearby wall reflections", PROCEEDINGS OF THE 26TH ANNUAL INTERNATIONAL CONFERENCE ON MOBILE COMPUTING AND NETWORKING, ACMPUB27, NEW YORK, NY, USA, 16 April 2020 (2020-04-16), pages 1 - 14, XP058479891, ISBN: 978-1-4503-7085-1, DOI: 10.1145/3372224.3380884
- INKYU AN ET AL: "Reflection-Aware Sound Source Localization", ARXIV.ORG, CORNELL UNIVERSITY LIBRARY, 201 OLIN LIBRARY CORNELL UNIVERSITY ITHACA, NY 14853, 21 November 2017 (2017-11-21), XP081300909

## Description

### [Technical Field]

The disclosure relates to a robot and a method for controlling the robot thereof, and more particularly to a robot for estimating a position at which a user voice is uttered and a method for controlling the robot.

### [Background Art]

Recently, technology on a sound source direction estimation for estimating a position of a sound source of a user voice or another audio signal is being developed. The sound source direction estimation may refer to a technique of estimating a direction of a user based on a microphone by measuring an intensity of a voice signal for each direction through sound included with user voice information.

However, this method lacks usability in an indoor environment in which sound is easily reflected from walls and the like, and is used with another sensor such as a camera to compensate the above. However, if the method uses another sensor such as a LiDAR sensor or a camera, identifying that an object is present at a relevant position is possible, but there is a problem of additional operations being necessary to repeatedly move a robot or rotating the robot in order to identify the relevant position through the LiDAR sensor or the camera.

WO 2019/138619 A1 relates to an information processing device for an autonomous moving body, such as a robot. The device estimates the direction of a sound source and evaluates the reliability of that estimation. Based on the current reliability and a history of past evaluation performance, the device plans a "direction-dependent motion," enabling more natural and flexible autonomous behavior.

JP 2016 048464 A teaches to discriminate whether a detected sound is a direct sound or a reflected sound. It does this by performing a geometric check using the map to see if there is an obstacle on the direct path between the estimated sound source and the robot (Abstract, [0008]).

### [Detailed Description of the Invention]

### [Technical Task]

According to an aspect of the disclosure, a robot includes: at least one sensor; a speaker; a microphone; a driver; at least one memory storing one or more instructions; and at least one processor configured to execute the one or more instructions, wherein the one or more instructions, when executed by the at least one processor, cause the robot to: generate a map including information regarding a plurality of objects based on sensing information obtained through the at least one sensor, generate ultrasonic waves toward each of the plurality of objects through the speaker, obtain reflectivity information regarding the plurality of objects based on reflected sounds reflected from each of the objects and received through the microphone, and store the reflectivity information, the reflected sounds reflected from each of the objects being at least a portion of the ultrasonic waves reflected from each of the objects, based on receiving a user voice through the microphone, obtain information on an intensity of the user voice for each of a plurality of directions, obtain information on a plurality of candidate directions from which the user voice is received from among the plurality of directions based on the information on the intensity of the user voice for each of the plurality of directions, obtain priority order information for the plurality of candidate directions based on a position of the robot and the stored reflectivity information, and obtain information on a direction in which the user voice is uttered from among the plurality of candidate directions based on the priority order information.

The one or more instructions, when executed by the at least one processor, may further cause the robot to: generate ultrasonic waves at preset distance intervals with respect to a wall object among the plurality of objects, and obtain reflectivity information regarding the wall object based on reflected sounds reflected from the wall object and received through the microphone, the reflected sounds reflected from the wall object being at least a portion of the ultrasonic waves generated at the preset intervals reflected from the wall object.

The one or more instructions, when executed by the at least one processor, may further cause the robot to: generate ultrasonic waves from two or more directions toward an object among the plurality of objects other than the wall object, and obtain reflectivity information regarding the object by obtaining an average value of reflected sounds reflected from the object and received through the microphone, the reflected sounds reflected from the object being at least a portion of the ultrasonic waves generated from the two or more directions that is reflected from the object.

The one or more instructions, when executed by the at least one processor, may further cause the robot to: obtain the information on the intensity of the user voice for each of the plurality of directions based on the position of the robot, and identify as the plurality of candidate directions a preset number of directions among the plurality of directions in which the respective intensity of the user voice exceeds a predetermined threshold.

The one or more instructions, when executed by the at least one processor, may further cause the robot to: identify objects, among the plurality of objects, positioned in the plurality of candidate directions relative to the position of the robot, and identify a priority order with respect to the plurality of candidate directions based on the respective information on the intensity of the user voice corresponding to each of the plurality of candidate directions and reflectivity information corresponding to the identified objects.

The one or more instructions, when executed by the at least one processor, may further cause the robot to: obtain a corrected intensity of the user voice for each of the plurality of candidate directions by multiplying weight values to the respective intensity of the user voice corresponding to each of the plurality of candidate directions, and identify a priority order based on the corrected intensities for the plurality of candidate directions, and wherein the weight values correspond to the reflectivity information corresponding to the identified objects.

The weight values and the reflectivity information corresponding to the identified objects may be inversely proportional to one another.

For each candidate direction of the plurality of candidate directions, the priority order may be directly proportional to the corrected intensity, and the one or more instructions, when executed by the at least one processor, may further cause the robot to: identify a candidate direction with a highest priority order from among the plurality of candidate directions as the direction in which the user voice is uttered.

The one or more instructions, when executed by the at least one processor, may further cause the robot to: perform voice recognition on the user voice by performing beam forming in the direction in which the user voice is uttered.

According to an aspect of the disclosure, a method for controlling a robot includes: generating a map including information regarding a plurality of objects based on sensing information obtained through at least one sensor of the robot; generating ultrasonic waves toward each of the plurality of objects through a speaker of the robot; obtaining reflectivity information regarding the plurality of objects based on the reflected sounds reflected from each of the objects and received a microphone of the robot, and storing the reflectivity information, the reflected sounds reflected from each of the objects being at least a portion of the ultrasonic waves reflected from each of the objects; based on a user voice being received through the microphone, obtaining information on an intensity of the user voice for each of a plurality of directions; obtaining information on a plurality of candidate directions from which the user voice is received from among the plurality of directions based on the information on the intensity of the user voice for each of the plurality of directions; obtaining priority order information for the plurality of candidate directions based on a position of the robot and the stored reflectivity information; and obtaining information on a direction in which the user voice is uttered from among the plurality of candidate directions based on the priority order information.

The generating ultrasonic waves toward each of the plurality of objects may include generating ultrasonic waves at preset distance intervals with respect to a wall object among the plurality of objects, and wherein the obtaining the reflectivity information may include obtaining reflectivity information regarding the wall object based on reflected sounds reflected from the wall object and received through the microphone, the reflected sounds reflected from the wall object being at least a portion of the ultrasonic waves generated at the preset intervals reflected from the wall object.

The generating ultrasonic waves toward each of the plurality of objects may include generating ultrasonic waves from two or more directions toward an object among the plurality of objects other than the wall object, and the obtaining the reflectivity information may include obtaining reflectivity information with respect to the object by obtaining an average value of the reflected sounds reflected from the object and received through the microphone, the reflected sounds reflected from the object being at least a portion of the ultrasonic waves generated from the two or more directions reflected from the object.

The obtaining information on the plurality of candidate directions may include: identifying as the plurality of candidate directions a preset number of directions from among the plurality of directions in which the respective intensity of the user voice exceeds a predetermined threshold.

The obtaining the priority order information may include: identifying objects among the plurality of objects positioned in the plurality of candidate directions relative to the position of the robot; and identifying a priority order with respect to the plurality of candidate directions based on the respective information on the intensity of the user voice corresponding to each of the plurality of candidate directions and reflectivity information corresponding to the identified objects.

The obtaining priority order information may include: obtaining a corrected intensity of the user voice for each of the plurality of candidate directions by multiplying weight values to the respective intensity of the user voice corresponding to each of the plurality of candidate directions; and identifying a priority order based on the corrected intensities for the plurality of candidate directions, and wherein the weight values correspond to the reflectivity information corresponding to the identified objects.

According to an aspect of the disclosure, a non-transitory computer readable medium having instructions stored therein, which when executed by at least one processor cause the at least one processor to execute a method of controlling a robot, wherein the method includes: generating a map including information regarding a plurality of objects based on sensing information obtained through at least one sensor of the robot; generating ultrasonic waves toward each of the plurality of objects through a speaker of the robot; obtaining reflectivity information regarding the plurality of objects based on the reflected sounds reflected from each of the objects and received a microphone of the robot, and storing the reflectivity information, the reflected sounds reflected from each of the objects being at least a portion of the ultrasonic waves reflected from each of the objects; based on a user voice being received through the microphone, obtaining information on an intensity of the user voice for each of a plurality of directions; obtaining information on a plurality of candidate directions from which the user voice is received from among the plurality of directions based on the information on the intensity of the user voice for each of the plurality of directions; obtaining priority order information for the plurality of candidate directions based on a position of the robot and the stored reflectivity information; and obtaining information on a direction in which the user voice is uttered from among the plurality of candidate directions based on the priority order information.

With regard to the non-transitory computer readable medium, the generating ultrasonic waves toward each of the plurality of objects may include generating ultrasonic waves at preset distance intervals with respect to a wall object among the plurality of objects, and the obtaining the reflectivity information may include obtaining reflectivity information regarding the wall object based on reflected sounds reflected from the wall object and received through the microphone, the reflected sounds reflected from the wall object being at least a portion of the ultrasonic waves generated at the preset intervals reflected from the wall object.

With regard to the non-transitory computer readable medium, the generating ultrasonic waves toward each of the plurality of objects may include generating ultrasonic waves from two or more directions toward an object among the plurality of objects other than the wall object, and the obtaining the reflectivity information may include obtaining reflectivity information with respect to the object by obtaining an average value of the reflected sounds reflected from the object and received through the microphone, the reflected sounds reflected from the object being at least a portion of the ultrasonic waves generated from the two or more directions reflected from the object.

With regard to the non-transitory computer readable medium, the obtaining information on the plurality of candidate directions may include: identifying as the plurality of candidate directions a preset number of directions from among the plurality of directions in which the respective intensity of the user voice exceeds a predetermined threshold.

With regard to the non-transitory computer readable medium, the obtaining the priority order information may include: identifying objects among the plurality of objects positioned in the plurality of candidate directions relative to the position of the robot; and identifying a priority order with respect to the plurality of candidate directions based on the respective information on the intensity of the user voice corresponding to each of the plurality of candidate directions and reflectivity information corresponding to the identified objects.

### [BRIEF DESCRIPTION OF THE DRAWINGS]

The above and other aspects, features, and advantages of certain embodiments of the present disclosure will be more apparent from the following description taken in conjunction with the accompanying drawings, in which:
FIG. 1 is a block diagram illustrating a configuration of a robot according to an embodiment of the disclosure;
FIG. 2 is a block diagram illustrating a plurality of configurations for generating a map including reflectivity information and identifying a direction in which a user voice is uttered using the generated map according to an embodiment of the disclosure;
FIGS. 3A, 3B and 3C are diagrams illustrating a method of generating a map including information on objects according to an embodiment of the disclosure;
FIGS. 4A, 4B and 4C are diagrams illustrating a method of obtaining reflectivity information with respect to objects and storing the same with a map according to an embodiment of the disclosure;
FIGS. 5A, 5B, 5C and 5D are diagrams illustrating a method of identifying a direction in which a user voice is uttered using reflectivity information according to an embodiment of the disclosure; and
FIG. 6 is a flowchart illustrating a control method of a robot according to an embodiment of the disclosure.

### [Mode for Implementing the Invention]

With respect to the description of the drawings, like reference numerals may be used to indicate like elements.

In describing the disclosure, where it is determined that the detailed description of related known technologies may unnecessarily confuse the gist of the disclosure, the detailed description thereof will be omitted.

Terms used in the disclosure have been used to simply described a specific embodiment, and is not intended to limit the scope of protection. A singular expression includes a plural expression, unless otherwise specified.

Embodiments according to the disclosure will be described in detail below with reference to the accompanying drawings to aid in the understanding of those of ordinary skill in the art.

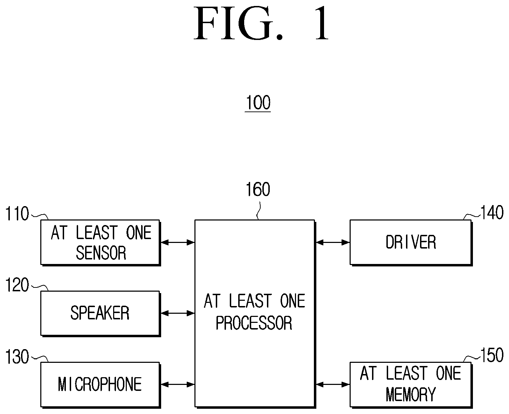

FIG. 1 is a block diagram illustrating a configuration of a robot according to an embodiment of the disclosure. As shown in FIG. 1, a robot 100 may include at least one sensor 110, a speaker 120, a microphone 130, a driver 140, at least one memory 150, and at least one processor 160. The configuration of the robot 100 is not limited to the configuration show in FIG. 1, and configurations obvious to one of ordinary skill in the art may be added or omitted. In addition, the robot 100 according to the disclosure may be a cleaning robot, but this is merely one embodiment, and the robot 100 may be a robot that provides various services within a home or a service robot (e.g., a guide robot, etc.) that provides services in various locations such as, for example, and without limitation, an airport, a hotel, a supermarket, a clothing store, a warehouse, a hospital, and the like.

The at least one sensor 110 may obtain various information on a state of the robot 100 or a surrounding environment of the robot 100. Specifically, the at least one sensor 110 may include a LiDAR sensor and an inertial measurement unit (IMU) sensor. The LiDAR sensor may project rays (e.g., laser, near-infrared light, visible light, ultraviolet rays, etc.) to objects, and obtain sensing information for obtaining information on a distance with an object by detecting light reflected by the object. The IMU sensor may be a sensor for sensing movement of the robot 100, and may include at least one from among a geomagnetic sensor, an acceleration sensor, and a gyro sensor. However, as described above, using the LiDAR sensor for obtaining information on a distance with an object is merely one embodiment, and the information on a distance with an object may be obtained using various sensors such as a depth sensor.

Specifically, the at least one processor 160 may obtain information on distances with a plurality of objects and movement information of the robot 100 based on sensing information obtained through the LiDAR sensor and the IMU sensor. However, the above is merely one embodiment, and the information on distances with the plurality of objects and movement information of the robot 100 may be obtained based on sensing information obtained by the at least one sensor 110.

In addition, the at least one sensor 110 may include a camera for capturing an image. Specifically, the camera may obtain an image of an object by capturing a surrounding of the robot 100. The robot 100 may obtain information (e.g., a type of object, a size of object, a form of object, etc.) on the object by inputting the image of the object in a trained neural network model (e.g., an object recognition model).

The speaker 120 may be a configuration for outputting an audio signal. Specifically, the speaker 120 may output ultrasonic waves toward an object according to a control of the at least one processor 160. The speaker 120 may also generate ultrasonic waves at preset distance intervals with respect to a wall object from among the plurality of objects. In addition, the speaker 120 may generate ultrasonic waves from two or more directions toward remaining objects among the plurality of objects aside from the wall object.

The microphone 130 may be configured to receive various audio signals. Specifically, the microphone 130 may receive reflected sounds which are ultrasonic waves output through the speaker 120 reflected by objects. In addition, the microphone 130 may receive a user voice. The microphone 130 may be provided in plurality and may receive the user voice received from a plurality of directions through a plurality of microphones.

The driver 140 may cause the robot 100 to travel or otherwise move according to the control of the at least one processor 160. Traveling may include an operation of the robot 100 moving with power. According to one or more embodiments of the disclosure, traveling may include an operation of the robot 100 moving using power in random directions. Alternatively, traveling may include an operation of the robot 100 moving using power along a preset line or route.

Specifically, the driver 140 may include wheels which allow the robot 100 to travel and a wheel driving motor which rotates the wheels. Specifically, the driver 140 may move the robot 100 within a space of a home. In addition, when the direction in which the user voice is uttered is identified, the driver 140 may move the robot 100 in the direction in which the user voice is uttered.

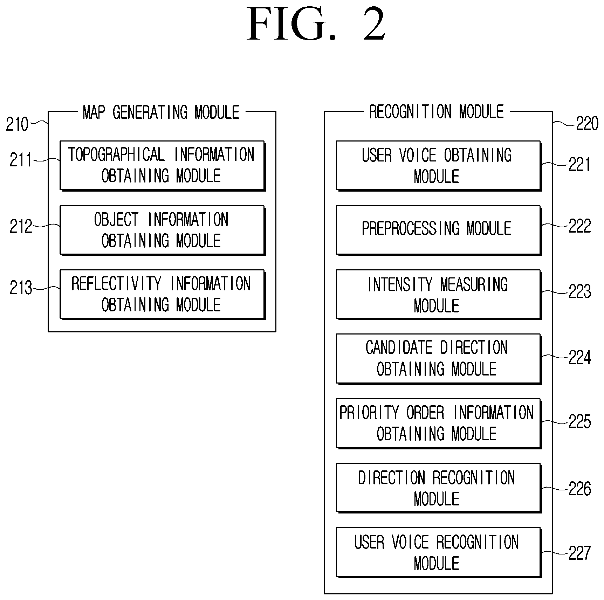

The at least one memory 150 may store instructions or data associated with an operating system (OS) and elements of the robot 100 to control the overall operation of the elements of the robot 100. Specifically, the at least one memory 150 may include a plurality of modules for generating a map including reflectivity information and identifying the direction in which the user voice is uttered by using the generated map. For example, the at least one memory 150 may include, as shown in FIG. 2, a map generating module 210, which includes a topographical information obtaining module 211, an object information obtaining module 212, and a reflectivity information obtaining module 213, and a recognition module 220 which includes a user voice obtaining module 221, a preprocessing module 222, an intensity measuring module 223, a candidate direction obtaining module 224, a priority order information obtaining module 225, a direction recognition module 226, and a user voice recognition module 227.

Specifically, if the map including reflectivity information is generated and a function for identifying the direction in which the user voice is uttered is executed using the generated map, the robot 100 may load data for various modules which are stored in a non-transitory memory to perform various operations in a volatile memory. Here, loading may mean an operation of calling and storing data stored in the non-volatile memory in the volatile memory for the at least one processor 160 to access.

In addition, the at least one memory 150 may store information on the trained neural network model to obtain information on objects by inputting an image obtained by the camera.

The at least one memory 150 may be implemented as the non-volatile memory (e.g., a hard disk, a solid state drive (SSD), a flash memory), the volatile memory (the at least one processor 160 within the memory may be included), and the like.

The at least one processor 160 may control the robot 100 according to at least one instruction stored in the memory 150.

Specifically, the at least one processor 160 may include one or more processors. In particular, the one or more processors may include one or more from among a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors may control one or a random combination from among other elements of the robot 100, and perform an operation associated with communication or data processing. The one or more processors may execute one or more programs or instructions stored in the memory. For example, the one or more processors may perform, by executing the one or more instructions stored in the memory, a method according to an embodiment of the disclosure.

When a method according to an embodiment of the disclosure includes a plurality of operations, the plurality of operations may be performed by one processor, or performed by a plurality of processors. That is, when a first operation, a second operation, and a third operation are performed by a method according to an embodiment, the first operation, the second operation, and the third operation may all be performed by a first processor, or the first operation and the second operation may be performed by the first processor (e.g., a generic-purpose processor) and the third operation may be performed by a second processor (e.g., an artificial intelligence dedicated processor). For example, the robot 100 may perform an operation of generating a map, and the like using the generic-purpose processor, and perform an operation of recognizing an object, an operation of recognizing the user voice, or the like using the artificial intelligence dedicated processor.

The one or more processors may be implemented as a single core processor that includes one core, or as one or more multicore processors that include a plurality of cores (e.g., a homogeneous multicore or a heterogeneous multicore). If the one or more processors are implemented as a multicore processor, each of the plurality of cores included in the multicore processor may include a memory inside the processor such as a cache memory and an on-chip memory, and a common cache shared by the plurality of cores may be included in the multicore processor. In addition, each of the plurality of cores (or a portion from among the plurality of cores) included in the multicore processor may independently read and perform a program command for implementing a method according to an embodiment of the disclosure, or read and perform a program command for implementing a method according to an embodiment of the disclosure due to a whole (or a portion) of the plurality of cores being interconnected.

When a method according to an embodiment of the disclosure includes a plurality of operations, the plurality of operations may be performed by one core from among the plurality of cores or performed by the plurality of cores included in the multicore processor. For example, when a first operation, a second operation, and a third operation are performed by a method according to an embodiment, the first operation, the second operation, and the third operation may all be performed by a first core included in the multicore processor, or the first operation and the second operation may be performed by the first core included in the multicore processor and the third operation may be performed by a second core included in the multicore processor.

In one or more embodiments of the disclosure, the at least one processor 160 may generate a map including information on the plurality of objects based on sensing information obtained through the at least one sensor 110. The plurality of objects may include goods included within the home, walls, windows, and the like. In addition, the map may include a drawing representing a plane by reducing a state of a space within the home to a certain ratio. According to embodiments of the disclosure, the map may include a drawing in which a plane structure of inside a house is reduced to a certain ratio and the same is indicated with predetermined symbols. In addition, the map may include a drawing indicating the plane structure of inside the house with lines. However, the above is not limited thereto, and the map may include positions of main objects inside the house. The map may be implemented as at least one from among a 2-dimensional grid map, a 2-dimensional linear vector map, a 3-dimensional, or a 3-dimensional map.

The at least one processor 160 may generate ultrasonic waves toward each of the plurality of objects through the speaker 120, receive sounds reflected from each of the objects through the microphone 130, obtain reflectivity information with respect to each of the plurality of objects, and store said reflectivity information in the at least one memory 150. The reflectivity information related to each of the plurality of objects may include information on a ratio of intensity of the ultrasonic waves output through the speaker 120 and intensity of reflected sounds received through the microphone. Information on reflectivity information may be obtained per object, but this is merely one embodiment, and may be obtained according to direction even if it is the same object.

Specifically, the at least one processor 160 may obtain information on reflectivity with different methods according to the types of objects.

In an embodiment, the at least one processor 160 may generate ultrasonic waves at preset distance intervals with respect to the wall object from among the plurality of objects, and obtain reflectivity information with respect to the wall object by receiving the reflected sounds reflected from the wall object through the microphone 130. In an embodiment, the at least one processor 160 may generate ultrasonic waves from two or more directions toward the remaining objects, excluding the wall object, from among the plurality of objects, receive the sounds reflected from the remaining objects based on the ultrasonic waves generated from two or more directions through the microphone 130, and obtain reflectivity information with respect to the remaining objects by obtaining an average value of received sounds reflected from the sounds generated in the two or more directions.

With the method as described above, the at least one processor 160 may store reflectivity information with respect to the plurality of objects together with the generated map.

When the user voice is received through the microphone 130, the at least one processor 160 may obtain information on an intensity of the user voice for each of the plurality of directions. The intensity of the user voice may mean sound wave energy which is transferred per unit time and unit area, and may be substituted with different terms such as, for example, and without limitation, an amplitude of the user voice, a volume of the user voice, an energy of the user voice, and the like. Further, the at least one processor 160 may obtain information on an intensity of the user voice for each of the plurality of directions for every preset interval (e.g., 1 degree) based on the robot 100.

The at least one processor 160 may obtain information on a plurality of candidate directions in which the user voice is received from among the plurality of directions based on information on the intensity of the user voice. The plurality of candidate directions may be directions in which there is a likelihood of the user voice being uttered from among the plurality of directions. Specifically, the at least one processor 160 may obtain the information on the intensity of the user voice received from the plurality of directions based on a position of the robot 100. Further, the at least one processor 160 may identify a preset number of directions (e.g., five directions) in which the intensity of the user voice is high from among the plurality of directions as the plurality of candidate directions. As used herein, an intensity may be considered "high" if it exceeds a predetermined threshold. Alternatively, an intensity may be considered "high" if it is among a subset of intensity values that are the highest from among the total set of obtained intensity values (e.g., the five highest intensity values from among a larger set of intensity values).

The at least one processor 160 may obtain priority order information with respect to the plurality of candidate directions based on a position of the robot 100 and the stored reflectivity information. The priority order information may include information on a direction in which there is a likelihood of the user voice being uttered from among the plurality of directions.

Specifically, the at least one processor 160 may identify an object positioned in the plurality of candidate directions based on the position of the robot 100. Then, the at least one processor 160 may identify a priority order with respect to the plurality of candidate directions based on the intensities of the user voice measured from each of the plurality of candidate directions and reflectivity information with respect to the identified object. The at least one processor 160 may correct the intensities of the user voice obtained from the plurality of candidate directions by multiplying weight values corresponding to the respective reflectivities of the objects positioned in the plurality of candidate directions to the intensities of the user voice obtained from the plurality of candidate directions. The weight values may be set low where reflectivities of objects positioned in the candidate directions are higher, and set high where reflectivities of objects positioned in the candidate directions are lower. Then, the at least one processor 160 may identify the priority order based on the corrected intensity of the user voice in each of the plurality of candidate directions.

The at least one processor 160 may obtain information on a direction in which the user voice is uttered from among the plurality of candidate directions based on the priority order information. Specifically, the at least one processor 160 may identify the priority order to be high as the corrected intensities of the user voice with respect to each of the plurality of candidate directions are larger, and obtain information on the direction in which the user voice is uttered by identifying the candidate direction with the highest priority order from among the plurality of candidate directions as the direction in which the user voice is uttered.

The at least one processor 160 may perform various functions based on information on the direction in which the user voice is uttered. In an embodiment, the at least one processor 160 may perform voice recognition on the user voice by performing beam forming in the direction in which the user voice is uttered. The voice recognition on the user voice may include at least one from among an operation of obtaining texts corresponding to the user voice, an operation of performing natural language understanding using texts corresponding to the user voice, and an operation of providing a response based on the result of natural language understanding or controlling the robot 100. In an embodiment, the at least one processor 160 may rotate or move the robot 100 for the robot 100 to face the direction in which the user voice is uttered.

As described above, by recognizing the direction in which the user voice is uttered using the reflectivity information, the robot 100 may provide various functions by more accurately recognizing a direction in which the user is positioned.

A method of generating a map including reflectivity information and identifying the direction in which the user voice is uttered using the generated map may be described in detail below with reference to FIG. 2 through FIG. 5D.

FIG. 2 is a block diagram illustrating a plurality of configurations for generating a map including reflectivity information and identifying a direction in which a user voice is uttered using the generated map according to an embodiment of the disclosure. As shown in FIG. 2, the robot 100 may include the map generating module 210 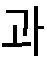 recognition module 220.

The map generating module 210 may generate a map which includes various information on objects based on sensing information received from the at least one sensor 110 and reflected sounds obtained through the microphone 130. Specifically, the map generating module 210 may include the topographical information obtaining module 211, the object information obtaining module 212, and the reflectivity information obtaining module 213 as shown in FIG. 2.

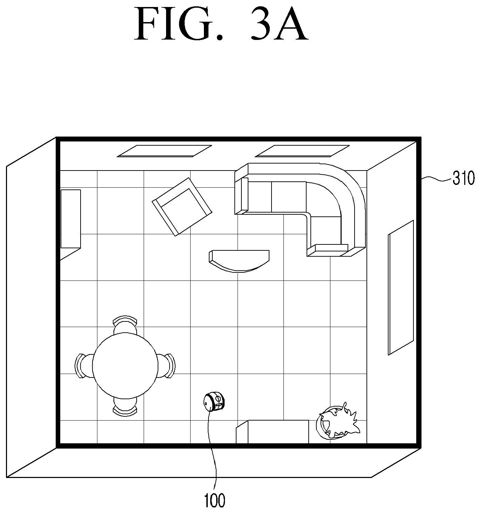

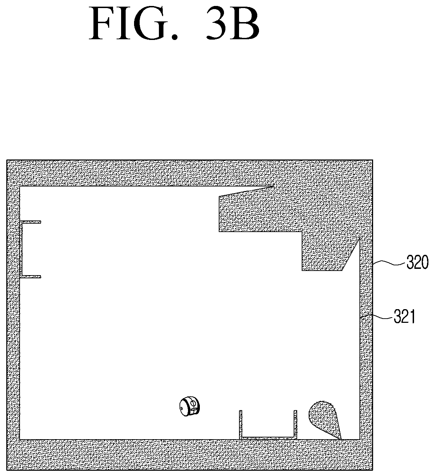

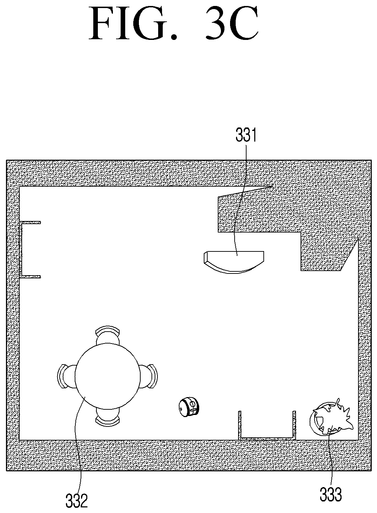

The topographical information obtaining module 211 may obtain topographical information of a space within the home based on sensing information obtained through the LiDAR sensor and the IMU sensor while the robot 100 is traveling. For example, as shown in FIG. 3A, if the robot 100 in a space 310 within the home generates a map according to a user command, the topographical information obtaining module 211 may control the robot 100 to travel in a preset pattern. The topographical information obtaining module 211 may obtain sensing information through the LiDAR sensor and the IMU sensor while the robot 100 is traveling. The topographical information obtaining module 211 may obtain a map 320 of the topographical information which includes an outermost line 321 of the space 310 within the home as shown in FIG. 3B based on the obtained sensing information.

The object information obtaining module 212 may obtain information on objects through an image obtained through the camera. Specifically, the object information obtaining module 212 may obtain information on the plurality of objects included in the space within the home by inputting the image obtained through the camera in the trained neural network model (e.g., the object recognition model). For example, as shown in FIG. 3A, if the robot 100 in the space 310 within the home generates a map according to the user command, the object information obtaining module 212 may obtain information on a first object 331, information on a second object 332, and information on a third object 333 by inputting the image obtained through the camera in the trained neural network model. The information on objects may include at least one from among shape information, type information, size information, and position information of the objects. Further, the object information obtaining module 212 may store the obtained information on objects in the generated map 320 in a metadata form.

The reflectivity information obtaining module 213 may generate ultrasonic waves directed toward each of the plurality of objects through the speaker 120 after having generated the map 320 or while generating the map 320, receive the reflected sounds reflected from each of the objects through the microphone 130, obtain reflectivity information with respect to the plurality of objects, and store the same. The reflectivity information obtaining module 213 may obtain information on reflectivity in various methods according to the type of the object.

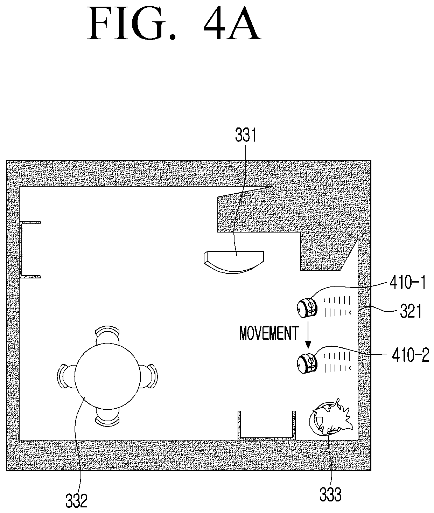

In an embodiment, the reflectivity information obtaining module 213 may generate ultrasonic waves at walls at specific distance (e.g., 2 m) intervals with respect to outermost objects (e.g., the wall object, a door object, etc.), and obtain information on reflectivity by measuring reflected volumes of the reflected sounds. For example, as shown in FIG. 4A, the reflectivity information obtaining module 213 may generate ultrasonic waves at a wall from a first position 410-1, measure first reflectivity by measuring the reflected volumes of the reflected sounds, generate ultrasonic waves at the wall from a second position 410-2 after having moved by a specific distance (e.g., 2 m) from the first position 410-1, and measure second reflectivity by measuring the reflected volumes of the reflected sounds. The reflectivity information obtaining module 213 may obtain reflectivity information with respect to the outermost objects by moving in the space 310 within the home in the method as described above. Further, the reflectivity information obtaining module 213 may obtain a representative value (e.g., an average value or a mode value, etc.) of reflectivities obtained in the method as described above and store same in the generated map 320. However, the description above only relates to one embodiment, and the reflectivity information obtaining module 213 may store the reflectivity information with respect to the outermost objects obtained from a plurality of positions in the generated map 320 for each position.

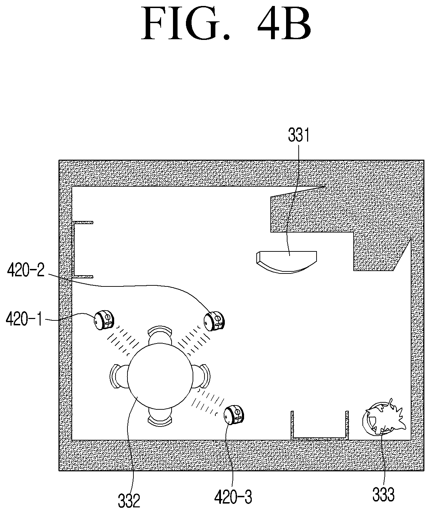

In an embodiment, the reflectivity information obtaining module 213 may generate ultrasonic waves from two or more directions directed towards the remaining objects excluding the outermost objects (e.g., home appliances, furniture, etc.) from among the plurality of objects, receive the reflected sounds reflected from the two or more directions toward the remaining objects, and obtain reflectivity information with respect to the remaining objects by obtaining the average value of the received sounds reflected from the two or more directions toward each remaining object. For example, as shown in FIG. 4B, the reflectivity information obtaining module 213 may generate ultrasonic waves at the second object 332 from a first direction 420-1 based on the second object 332, measure the first reflectivity by measuring the reflected volumes of the reflected sounds, generate ultrasonic waves at the second object 332 from a second direction 420-2, measure the second reflectivity by measuring the reflected volumes of the reflected sounds, and generate ultrasonic waves at the second object 332 from a third direction 420-3. The reflectivity information obtaining module 213 may obtain reflectivity information with respect to the second object 332 based on the sound reflected from the plurality of directions based on the method as described above. Further, the reflectivity information obtaining module 213 may store the representative value of the first to third reflectivities obtained in the method as described above in the generated map 320. However the above merely describes one embodiment, and the reflectivity information obtaining module 213 may store the reflectivity information with respect to the remaining objects obtained from the plurality of directions in the generated map 320 for each direction.

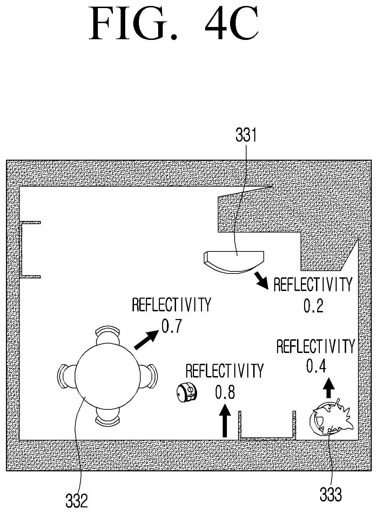

The reflectivity information obtaining module 213 may store the reflectivity information obtained in the method as described above in the metadata form of the map 320. In an example, the reflectivity information obtaining module 213 may store the reflectivity information with respect to the first object 331 as 0.2, store the reflectivity information with respect to the second object 332 as 0.7, store the reflectivity information with respect to the third object 333 as 0.4, and store the reflectivity information with respect to the wall object as 0.8 as shown in FIG. 4C.

The recognition module 220 may identify an utterance position of the user voice using the map obtained by the map generating module 210, and recognize the user voice by using the identified utterance position. The recognition module 220 may include, as shown in FIG. 2, the user voice obtaining module 221, the preprocessing module 222, the intensity measuring module 223, the candidate direction obtaining module 224, the priority order information obtaining module 225, the direction recognition module 226, and the user voice recognition module 227.

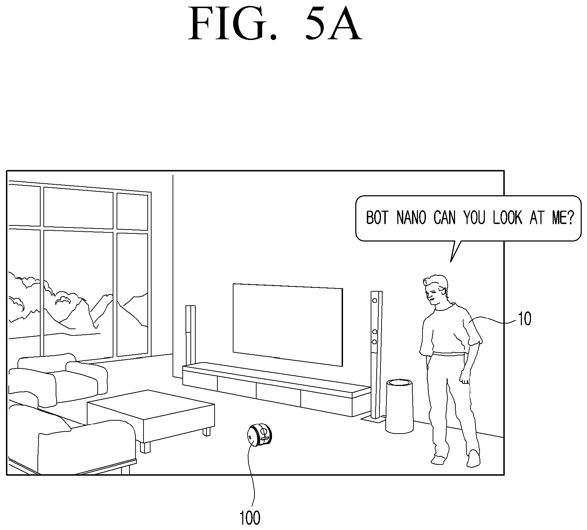

The user voice obtaining module 221 may obtain the user voice through the microphone 130. The user voice may be a voice uttered by the user, and may be differentiated from noise and the like. Specifically, the user voice obtaining module 221 may identify whether the user voice is included in an audio signal by inputting the obtained audio signal into a trained neural network model. For example, the user voice obtaining module 221 may obtain the user voice of "Bot nano, can you look at me?" uttered by a user 10 as shown in FIG. 5A.

The preprocessing module 222 may perform a preprocessing operation on the obtained user voice. Specifically, the preprocessing module 222 may obtain an audio signal for a portion of bandwidths from among the user voice obtained through a band pass filter. Then, the preprocessing module 222 may perform the preprocessing operation of removing noise, echo, or the like.

The intensity measuring module 223 may measure an intensity of the user voice obtained from the plurality of directions. Then, the intensity measuring module 223 may perform sampling of the user voice obtained from the plurality of directions. Specifically, the intensity measuring module 223 may measure the intensity of the user voice obtained from the plurality of directions by using a steered response power phase transform (SRP-PHAT) algorithm. The intensity measuring module 223 may measure the intensity of the user voice from the plurality of directions (e.g., 360 directions) for every preset interval (e.g., 1 degree) based on the robot 100.

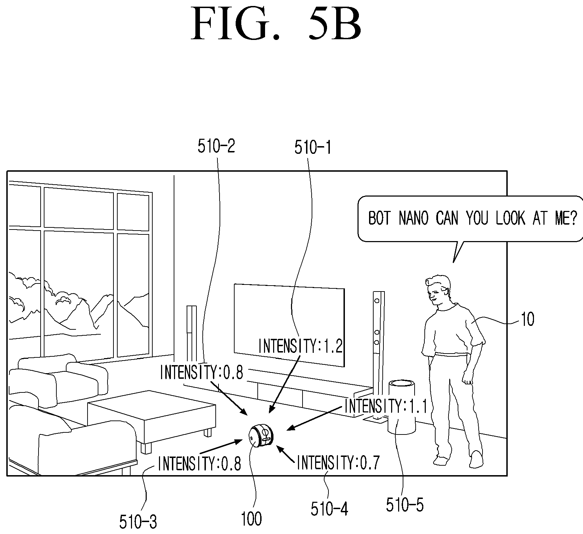

The candidate direction obtaining module 224 may identify a preset number of directions in which the intensity of the user voice is considered to be high from among the plurality of directions as the plurality of candidate directions. For example, the candidate direction obtaining module 224 may obtain, as shown in FIG. 5B, five directions in which the intensity of the user voice is high from among the directions of the plurality of directions (e.g., 360 directions). That is, an intensity of the user voice obtained in a first candidate direction 510-1 may be 1.2, an intensity of the user voice obtained in a second candidate direction 510-2 may be 0.8, an intensity of the user voice obtained in a third candidate direction 510-3 may be 0.8, an intensity of the user voice obtained in a fourth candidate direction 510-4 may be 0.7, and an intensity of the user voice obtained in a fifth candidate direction 510-5 may be 1.1. The intensities shown in FIG. 5B may be relative values. The candidate direction obtaining module 224 may identify the highest intensity information from among intensity information of the user voice received from an adjacent direction (e.g., a direction within a 10 degree range), from among the plurality of directions, as the candidate direction, and exclude the remaining adjacent directions from the candidate directions even if the intensity of the user voice is larger than in other directions.

The priority order information obtaining module 225 may obtain priority order information with respect to the plurality of candidate directions based on the position of the robot 100 and the stored reflectivity information.

Specifically, the priority order information obtaining module 225 may identify objects positioned in the plurality of candidate directions based on the position of the robot. For example, the priority order information obtaining module 225 may identify a first object to a fifth object which are positioned in a first candidate direction to a fifth candidate direction based on the position of the robot 100. Objects may not be present in a portion of the directions from among the plurality of candidate directions.

Further, the priority order information obtaining module 225 may identify weight values corresponding to the reflectivities with respect to objects that are positioned in the plurality of candidate directions. The weight values may be set low where reflectivities of the objects positioned in the candidate directions are higher, and may be set high where reflectivities of the objects positioned in the candidate directions are lower. For example, the weight value and reflectivity may have a relationship as in Equation 1 below. Equation 1: $weight value = 1 - reflectivity$

However, Equation 1 described above is merely one embodiment, and the relationship between the weight value and reflectivity may be represented in an equation in which the weight value and reflectivity have a different inversely proportional relationship.

The priority order information obtaining module 225 may correct the intensities of the user voice obtained from the plurality of candidate directions by multiplying the weight values corresponding to the reflectivities with respect to the objects positioned in the plurality of candidate directions to the intensities of the user voice obtained from the plurality of candidate directions. For example, the priority order information obtaining module 225 may correct the intensity of the user voice obtained from the first candidate direction to 0.36 by multiplying the intensity information by 0.3, which is the weight value corresponding to the reflectivity with respect to the first object positioned in the first candidate direction from among the plurality of candidate directions, and correct the intensity of the user voice obtained from the third candidate direction to 0.56 by multiplying the intensity information by 0.7, which is the weight value corresponding to the reflectivity with respect to the third object positioned in the third candidate direction from among the plurality of candidate directions.

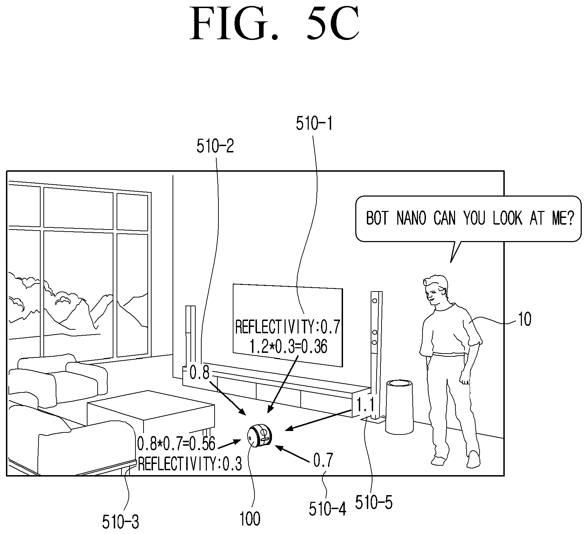

The priority order information obtaining module 225 may identify the priority order information with respect to the plurality of candidate directions based on the corrected intensities of the user voice with respect to each of the plurality of candidate directions. That is, the priority order information obtaining module 225 may identify the priority order of a given candidate direction to be high as the corrected intensities of the user voice with respect to each of the plurality of candidate directions are higher, and identify the priority order of a given candidate direction to be low as the intensities of the user voice are lower. For example, the priority order information obtaining module 225 may identify, as shown in FIG. 5C, an intensity of the user voice with respect to the first candidate direction 510-1 as 0.36, identify an intensity of the user voice with respect to the second candidate direction 510-2 as 0.8, identify an intensity of the user voice with respect to the third candidate direction 510-3 as 0.56, identify an intensity of the user voice with respect to the fourth candidate direction 510-4 as 0.7, and identify an intensity of the user voice with respect to the fifth candidate direction 510-5 as 1.1. Then, the priority order information obtaining module 225 may identify the fifth candidate direction 510-5 in a first priority order, identify the second candidate direction 510-2 in a second priority order, identify the fourth candidate direction 510-4 in a third priority order, identify the third candidate direction 510-3 in a fourth priority order, and identify the first candidate direction 510-1 in a fifth priority order.

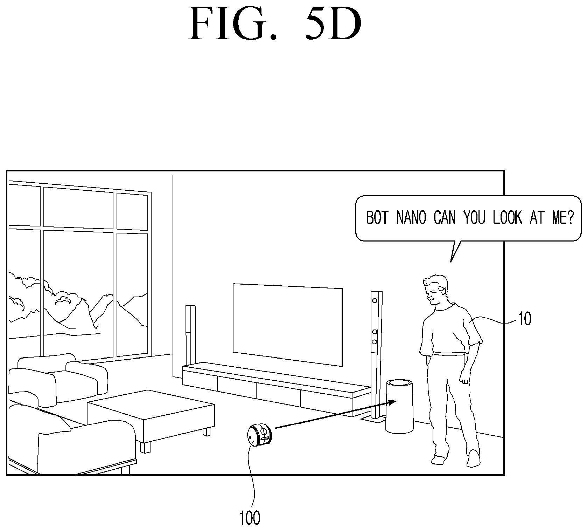

The direction recognition module 226 may recognize the direction in which the user voice is uttered based on the priority order information. Specifically, the direction recognition module 226 may recognize the candidate direction of the first priority order as the direction in which the user voice is uttered. For example, as shown in FIG. 5D, the direction recognition module 226 may recognize the fifth candidate direction 510-5 identified as the first priority order as the direction in which the user voice is uttered. In another example, the direction recognition module 226 may identify a candidate area in which the user is positioned by capturing the candidate directions with the camera in an order of high priority order, and identify the identified candidate area as the direction in which the user voice is uttered.

The user voice recognition module 227 may perform voice recognition on the user voice. The user voice recognition module 227 may perform voice recognition on the (additional) user voice by performing beam forming in the direction in which the user voice is uttered. The user voice recognition module 227 may convert the additional user voice into text, perform a natural language understanding of the converted text, and provide a response to the user 10 based on the result of natural language understanding or control the robot 100 according to the user voice. For example, the user voice recognition module 227 may recognize the user voice of "Bot, can you look at me?" which is the user voice and rotate the robot 100 in the direction in which the user voice is uttered.

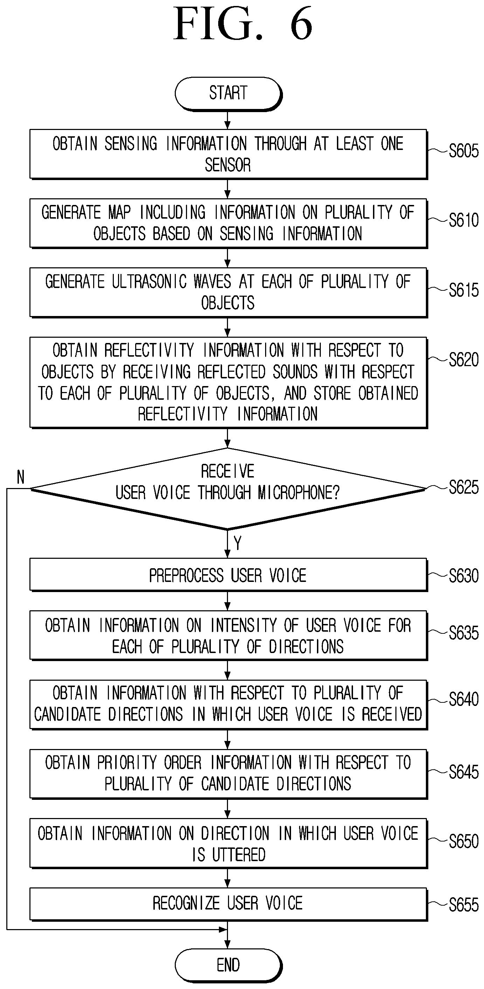

FIG. 6 is a flowchart illustrating a control method of a robot according to an embodiment of the disclosure.

First, the robot 100 may obtain sensing information through the at least one sensor (S605). Specifically, if an event for map creating (e.g., an event in which a cleaning robot is initially installed, and a user command for map creating is received, etc.) occurs, the robot 100 may travel in the space within the home through the impetus of the driver 140. Then, the robot 100 may obtain sensing information for map generating by using the at least one sensor 110 while traveling in the space within the home. In an example, the robot 100 may obtain a sensing value for obtaining distance information between the robot 100 and an object using the LiDAR sensor. In an example, the robot 100 may obtain a sensing value for obtaining movement information of the robot 100 by using the IMU sensor. In an example, the robot 100 may obtain an image for obtaining information on an object at a surrounding of the robot 100 by using the camera.

The robot 100 may generate a map including information on a plurality of objects based on the sensing information (S610). Specifically, the robot 100 may obtain topographical information of the space within the home using the IMU sensor and the LiDAR sensor, and obtain information on the plurality of objects included in the space within the home by inputting the image obtained through the camera in the trained neural network model. Various information such as, for example, and without limitation, type information of each of the plurality of objects, size information of each of the plurality of objects, shape information of each of the plurality of objects, position information of each of the plurality of objects, and the like may be included in the information on the plurality of objects. Further, the robot 100 may store information on the objects together with a map including information on the space within the home in the meta data form.

The robot 100 may generate ultrasonic waves at each of the plurality of objects (S615). The robot 100 may generate the ultrasonic waves using different methods based on types of the plurality of objects.

In an example, the robot 100 may generate the ultrasonic waves at a wall at specific distance intervals (e.g., 3 m) with respect to the wall object from among the plurality of objects. With respect to the outermost objects such as windows or doors other than the wall object, ultrasonic waves may be generated at specific distance intervals as described above. In an example, the robot 100 may determine two or more number of samples (e.g., five) with an angle range to which the robot 100 ) may view with respect to the remaining objects (e.g., furniture, goods within the home, etc.) excluding the outermost objects from among the plurality of objects, and generate the ultrasonic waves from the two or more directions based on the object by equally dividing the angle according to the number of samples.

The robot 100 may generate the ultrasonic waves at each of the plurality of objects while traveling the space within the home to generate a map, but this is merely one embodiment, and the robot 100 may generate the ultrasonic waves at each of the plurality of objects after having generated the map.

The robot 100 may obtain reflectivity information with respect to objects by receiving reflected sounds with respect to each of the plurality of obj ects, and store the obtained reflectivity information (S620). Specifically, the robot 100 may obtain information on the intensities of the reflected sounds by receiving reflected sounds with respect to each of the plurality of objects. Then, the robot 100 may obtain information on the reflectivity of each of the plurality of objects based on a ratio of the intensities of the output ultrasonic waves and the received intensities of the reflected sounds.

The robot 100 may obtain information on the reflectivity for every specific distance interval by receiving the reflected sounds with respect to the ultrasonic waves generated at specific distance intervals for the outermost objects. The robot 100 may store the information on reflectivity for every specific distance interval, and store the representative value (e.g., the average value, the modal value, etc.) of the reflectivity obtained at every specific distance interval as information on the reflectivity of the objects. In addition, the robot 100 may obtain information on the reflectivities according to at least two directions by receiving the reflected sounds obtained from the at least two directions for the remaining objects excluding the outermost objects. The robot 100 may store information on the reflectivities for every at least two directions, and store the representative value (e.g., the average value, the modal value, etc.) of the reflectivities obtained at every at least two directions as information on the reflectivity of the objects.

The robot 100 may store information on reflectivity of objects together with the map. As described above, the robot 100 may store information on reflectivity of objects on the map in the meta data form.

The robot 100 may generate a map including the reflectivity information with respect to the objects through operation S605 to operation S620 and store in the robot 100. The robot 100 may not only store the map in the robot 100, but also transmit the map to an external server to store the map in the external server. In addition, operation S605 to operation S620 may be performed by another electronic device other than the robot 100.

After operation S620 (i.e., after the map is generated), the robot 100 may identify whether the user voice is received through the microphone 130 (S625). Specifically, the robot 100 may identify whether the user voice is received using the trained neural network model to identify whether the voice is that of a person, but this is merely one embodiment, and may identify whether the user voice is received in another method.

If the user voice is identified as received (S625-Y), the robot 100 may preprocess the user voice (S630). Specifically, the robot 100 may obtain the user voice of a specific frequency range using a preset filter (e.g., the band pass filter, etc.), and perform preprocessing of the user voice such as noise removal.

The robot 100 may obtain information on the intensities of the user voice for each of the plurality of directions (S635). Specifically, the robot 100 may obtain the information on the intensities of the user voice for each of the plurality of directions at preset intervals (e.g., 1 degree) based on the robot 100. In an example, the robot 100 may obtain the information on the intensities of the user voice with respect to the first direction to three hundred sixty directions.

The robot 100 may obtain information on the plurality of candidate directions in which the user voice is received (S640). Specifically, the robot 100 may identify a preset number of directions (e.g., five) in which the intensity of the user voice is high based on the information on the intensities of the user voice obtained for each of the plurality of directions as the plurality of candidate directions. The robot 100 may identify the largest intensity information from among intensity information of the user voice received from an adjacent direction (e.g., a direction within a 10 degree range) from among the plurality of directions as the candidate direction, and exclude the remaining adjacent directions from the candidate directions even if the intensity of the user voice is larger than in other directions.

The robot 100 may obtain the priority order information with respect to the plurality of candidate directions (S645). Specifically, the robot 100 may obtain the priority order information with respect to the plurality of candidate directions based on the corrected intensities of the user voice after having corrected the intensities of the user voice received from the candidate directions based on the position of the robot 100 and the reflectivity information.

Specifically, the robot 100 may identify objects positioned in the plurality of candidate directions based on the position of the robot. For example, the robot 100 may identify the first object positioned at the first candidate direction based on the position of the robot 100, and identify a second object positioned at a second candidate direction.

Then, the robot 100 may identify weight values corresponding to the reflectivities with respect to the objects positioned in the plurality of candidate directions. The weight values may be set low where reflectivities with respect to the objects positioned in the candidate directions are higher, and set high where reflectivities with respect to the objects positioned in the candidate directions are lower. That is, the weight value may be set low because of the likelihood of it being reflected sounds of the user voice reflecting from objects rather than the actual user voice as the reflectivities with respect to the objects positioned in the candidate directions are higher. A value of the weight value may be a value between 0 and 1, but the disclosure is not limited thereto.

The robot 100 may correct the intensities of the user voice obtained from the plurality of candidate directions by multiplying weight values corresponding to the reflectivities with respect to the objects positioned in the plurality of candidate directions to the intensities of the user voice obtained from the plurality of candidate directions. That is, the robot 100 may multiply a weight value which is set low to an intensity of the user voice received from a direction in which an object with high reflectivity is positioned, and multiply a weight value which is set high to an intensity of the user voice received from a direction in which an object with low reflectivity is positioned.

Then, the robot 100 may identify the priority order information with respect to the plurality of candidate directions based on the corrected intensities of the user voice for each of the plurality of candidate directions. That is, the robot 100 may identify the priority order to be high as the corrected intensities of the user voice with respect to each of the plurality of candidate directions are larger, and identify the priority order to be low as the intensities of the user voice are smaller.

The robot 100 may obtain information on the direction in which the user voice is uttered based on the priority order information (S650). Specifically, the robot 100 may identify the candidate direction with the highest priority order as the direction in which the user voice is uttered. Alternatively, the robot 100 may identify a candidate area in which the user is positioned by capturing the candidate directions with the camera in the order of high priority order, and identify the identified candidate area as the direction in which the user voice is uttered.

Then, the robot 100 may recognize the user voice (S655). Specifically, the robot 100 may drive the robot 100 to face the direction in which the user is positioned based on the direction in which the user voice is uttered. In addition, the robot 100 may perform voice recognition on the (additional) user voice by performing beam forming in the direction in which the user voice is uttered.

A function associated with artificial intelligence according to the disclosure may be operated through the processor and the memory of the robot 100.

The processor may be formed of one or a plurality of processors. The one or plurality of processors may include at least one from among the CPU, the GPU, and the NPU, but is not limited to the example of the above-described processor.

The CPU may be a generic-purpose processor which can perform not only general operations but also artificial intelligence operations, and may effectively execute a complex program through a multi-layer cache structure. The CPU may be advantageous is a serial processing method which allows for an organic connection between a previous calculation result and a following calculation result through a consecutive calculation. The generic-purpose processor is not limited to the above-described example except for when specified as the above-described CPU.

The GPU may be a processor for mass operations such as a floating-point operation used in graphic operations, and perform large-scale operations in parallel by integrating a large number of cores. Specifically, the GPU may be advantageous in a parallel processing method such as a convolution operation compared to the CPU. In addition, the GPU may be used as a co-processor for supplementing a function of the CPU. The processor for mass operations is not limited to the above-described examples except for when specified as the above-described GPU.

The NPU may be a processor specialized in artificial intelligence operations which uses an artificial neural network, and may implement each layer which forms the artificial neural network as hardware (e.g., silicon). Because the NPU may be designed specifically according to the requirements of a company, it may have a lower degree of freedom compared to the CPU or the GPU, but may effectively process an artificial intelligence operation required by the company. As a processor specialized in artificial intelligence operations, the NPU may be implemented in various forms such as, for example, and without limitation, a tensor processing unit (TPU), an intelligence processing unit (IPU), a vision processing unit (VPU), and the like. The artificial intelligence processor is not limited to the above-described examples except for when specified as the above-described NPU.

In addition, the one or the plurality of processors may be implemented as a system on chip (SoC). The SoC may further include a memory in addition to the one or the plurality of processors, and a network interface such as a Bus for data communication between the processor and the memory.

If the plurality of processors is included in the system on chip (SoC) included in the robot, the robot may perform operations (e.g., operations associated with learning of an artificial intelligence model or inference) associated with artificial intelligence using a portion of the processors from among the plurality of processors. For example, the robot may perform operations associated with artificial intelligence using at least one from among the GPU, the NPU, the VPU, the TPU, and the hardware accelerator which are specialized in artificial intelligence operations such as the convolution operation and a matrix multiplication operation from among the plurality of processors. However, the above is merely one embodiment, and operations associated with artificial intelligence may be processed using the generic-purpose processor such as the CPU.

In addition, the robot may perform an operation with respect to a function associated with artificial intelligence by using multi-cores (e.g., a dual core, a quad core, etc.) included in one processor. Specifically, the robot may perform artificial intelligence operations such as, for example, and without limitation, convolution operations, matrix multiplication operations, and the like in parallel using the multi-cores included in the processor.

The one or the plurality of processors may control to process input data according to a pre-defined operation rule or an artificial intelligence model stored in the memory. The pre-defined operation rule or the artificial intelligence model is characterized by being created through learning.

Here, the being created through learning may refer to the pre-defined operation rule or the artificial intelligence model of a desired characteristic being formed by applying a learning algorithm to multiple learning data. The learning may be carried out in the machine itself in which the artificial intelligence according to the disclosure is performed, or carried out through a separate server/system.

The artificial intelligence model may be formed with a plurality of neural network layers. The at least one layer may have at least one weight value (weight values), and perform an operation of a layer through an operation result of a previous layer and at least one defined operation. Examples of the neural network may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep-Q Networks, and a Transformer, and the neural network of the disclosure is not limited to the above-described examples, unless otherwise specified.

The learning algorithm may be a method for training a predetermined target machine (e.g., robot) to make decisions or predictions on its own using the plurality of learning data. Examples of the learning algorithm may include a supervised learning, an unsupervised learning, a semi-supervised learning, or a reinforcement learning, and the learning algorithm of the disclosure is not limited to the above-described examples unless otherwise specified.

A method according to the various embodiments of the disclosure may be provided included a computer program product. The computer program product may be exchanged between a seller and a purchaser as a commodity. The computer program product may be distributed in a form of a machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be stored at least temporarily in the storage medium such as a server of a manufacturer, a server of an application store, or a memory of a relay server, or temporarily generated.

The method according to various embodiments of the disclosure may be implemented with software including instructions stored in a machine-readable storage media (e.g., computer). The machine may call the stored instruction from the storage medium, and as a device operable according to the called instruction, may include the robot according to the embodiments described above.

The machine-readable storage medium may be provided in the form of a non-transitory storage medium. Herein, the 'non-transitory storage medium' merely means that it is a tangible device, and does not include a signal (e.g., electromagnetic waves), and the term does not differentiate data being semi-permanently stored or being temporarily stored in the storage medium. In an example, the 'non-transitory storage medium' may include a buffer in which data is temporarily stored.

Based on the instruction being executed by the processor, the processor may directly or using other elements under the control of the processor perform a function corresponding to the instruction. The instruction may include a code generated by a compiler or executed by an interpreter.

## Claims

1. A robot (100) comprising:
at least one sensor (110);
a speaker (120);
a microphone (130);
a driver (140);
at least one memory (150) storing one or more instructions; and
at least one processor (160) configured to execute the one or more instructions,
wherein the one or more instructions, when executed by the at least one processor (160), cause the robot (100) to:
generate a map (320) comprising information regarding a plurality of objects (331, 332, 333) based on sensing information obtained through the at least one sensor (110),
based on receiving a user voice through the microphone (130), obtain information on an intensity of the user voice for each of a plurality of directions,
obtain information on a plurality of candidate directions from which the user voice is received from among the plurality of directions based on the information on the intensity of the user voice for each of the plurality of directions,
**characterized in that** the one or more instructions further cause the robot (100) to:
generate ultrasonic waves toward each of the plurality of objects (331, 332, 333) through the speaker (120),
obtain reflectivity information regarding the plurality of objects (331, 332, 333) based on reflected sounds reflected from each of the objects (331, 332, 333) and received through the microphone (130), and store the reflectivity information, the reflected sounds reflected from each of the objects (331, 332, 333) being at least a portion of the ultrasonic waves reflected from each of the objects (331, 332, 333),
obtain priority order information for the plurality of candidate directions based on a position of the robot (100) and the stored reflectivity information, and
obtain information on a direction in which the user voice is uttered from among the plurality of candidate directions based on the priority order information.

2. The robot (100) of claim 1, wherein the one or more instructions, when executed by the at least one processor (160), further cause the robot (100) to:
generate ultrasonic waves at preset distance intervals with respect to a wall object among the plurality of objects (331, 332, 333), and
obtain reflectivity information regarding the wall object based on reflected sounds reflected from the wall object and received through the microphone (130), the reflected sounds reflected from the wall object being at least a portion of the ultrasonic waves generated at the preset intervals reflected from the wall object.

3. The robot (100) of claim 2, wherein the one or more instructions, when executed by the at least one processor (160), further cause the robot (100) to:
generate ultrasonic waves from two or more directions toward an object among the plurality of objects (331, 332, 333) other than the wall object, and
obtain reflectivity information regarding the object by obtaining an average value of reflected sounds reflected from the object and received through the microphone (130), the reflected sounds reflected from the object being at least a portion of the ultrasonic waves generated from the two or more directions that is reflected from the object.

4. The robot (100) of claim 1, wherein the one or more instructions, when executed by the at least one processor (160), further cause the robot (100) to:
obtain the information on the intensity of the user voice for each of the plurality of directions based on the position of the robot (100), and
identify as the plurality of candidate directions a preset number of directions among the plurality of directions in which the respective intensity of the user voice exceeds a predetermined threshold.

5. The robot (100) of claim 1, wherein the one or more instructions, when executed by the at least one processor (160), further cause the robot (100) to:
identify objects (331, 332, 333), among the plurality of objects (331, 332, 333), positioned in the plurality of candidate directions relative to the position of the robot (100), and
identify a priority order with respect to the plurality of candidate directions based on the respective information on the intensity of the user voice corresponding to each of the plurality of candidate directions and reflectivity information corresponding to the identified objects (331, 332, 333).

6. The robot (100) of claim 5, wherein the one or more instructions, when executed by the at least one processor (160), further cause the robot (100) to:
obtain a corrected intensity of the user voice for each of the plurality of candidate directions by multiplying weight values to the respective intensity of the user voice corresponding to each of the plurality of candidate directions, and
identify a priority order based on the corrected intensities for the plurality of candidate directions, and
wherein the weight values correspond to the reflectivity information corresponding to the identified objects (331, 332, 333).

7. The robot (100) of claim 6, wherein the weight values and the reflectivity information corresponding to the identified objects (331, 332, 333) are inversely proportional to one another.

8. The robot (100) of claim 6, wherein, for each candidate direction of the plurality of candidate directions, the priority order is directly proportional to the corrected intensity, and
wherein the one or more instructions, when executed by the at least one processor (160), further cause the robot (100) to:
identify a candidate direction with a highest priority order from among the plurality of candidate directions as the direction in which the user voice is uttered.

9. The robot (100) of claim 1, wherein the one or more instructions, when executed by the at least one processor (160), further cause the robot (100) to:
perform voice recognition on the user voice by performing beam forming in the direction in which the user voice is uttered.

10. A method for controlling a robot (100), the method comprising:
generating a map comprising information regarding a plurality of objects (331, 332, 333) based on sensing information obtained through at least one sensor (110) of the robot (100);
based on a user voice being received through the microphone (130), obtaining information on an intensity of the user voice for each of a plurality of directions;
obtaining information on a plurality of candidate directions from which the user voice is received from among the plurality of directions based on the information on the intensity of the user voice for each of the plurality of directions;
the method being **characterized in that** it further comprises:
generating ultrasonic waves toward each of the plurality of objects (331, 332, 333) through a speaker (120) of the robot (100),
obtaining reflectivity information regarding the plurality of objects (331, 332, 333) based on the reflected sounds reflected from each of the objects (331, 332, 333) and received a microphone (130) of the robot (100), and storing the reflectivity information, the reflected sounds reflected from each of the objects (331, 332, 333) being at least a portion of the ultrasonic waves reflected from each of the objects (331, 332, 333);
obtaining priority order information for the plurality of candidate directions based on a position of the robot (100) and the stored reflectivity information; and
obtaining information on a direction in which the user voice is uttered from among the plurality of candidate directions based on the priority order information.

11. The method of claim 10, wherein the generating ultrasonic waves toward each of the plurality of objects (331, 332, 333) comprises generating ultrasonic waves at preset distance intervals with respect to a wall object among the plurality of objects (331, 332, 333), and
wherein the obtaining the reflectivity information comprises obtaining reflectivity information regarding the wall object based on reflected sounds reflected from the wall object and received through the microphone (130), the reflected sounds reflected from the wall object being at least a portion of the ultrasonic waves generated at the preset intervals reflected from the wall object.

12. The method of claim 11, wherein the generating ultrasonic waves toward each of the plurality of objects (331, 332, 333) comprises generating ultrasonic waves from two or more directions toward an object among the plurality of objects (331, 332, 333) other than the wall object, and
wherein the obtaining the reflectivity information further comprises obtaining reflectivity information with respect to the object by obtaining an average value of the reflected sounds reflected from the object and received through the microphone (130), the reflected sounds reflected from the object being at least a portion of the ultrasonic waves generated from the two or more directions reflected from the object.

13. The method of claim 10, wherein the obtaining information on the plurality of candidate directions comprises:
identifying as the plurality of candidate directions a preset number of directions from among the plurality of directions in which the respective intensity of the user voice exceeds a predetermined threshold.

14. The method of claim 10, wherein the obtaining the priority order information comprises:
identifying objects (331, 332, 333) among the plurality of objects (331, 332, 333) positioned in the plurality of candidate directions relative to the position of the robot (100); and
identifying a priority order with respect to the plurality of candidate directions based on the respective information on the intensity of the user voice corresponding to each of the plurality of candidate directions and reflectivity information corresponding to the identified objects (331, 332, 333).

15. The method of claim 14, wherein the obtaining priority order information comprises:
obtaining a corrected intensity of the user voice for each of the plurality of candidate directions by multiplying weight values to the respective intensity of the user voice corresponding to each of the plurality of candidate directions; and
identifying a priority order based on the corrected intensities for the plurality of candidate directions, and
wherein the weight values correspond to the reflectivity information corresponding to the identified objects (331, 332, 333).

## Patentansprüche

1. Roboter (100), umfassend:
mindestens einen Sensor (110);
einen Lautsprecher (120);
ein Mikrofon (130);
einen Antrieb (140);
mindestens einen Speicher (150), der eine oder mehrere Anweisungen speichert; und
mindestens einen Prozessor (160), der dazu konfiguriert ist, die eine oder die mehreren Anweisungen auszuführen,
wobei die eine oder die mehreren Anweisungen, wenn sie von dem mindestens einen Prozessor (160) ausgeführt werden, den Roboter (100) dazu veranlassen:
basierend auf Erfassungsinformationen, die über den mindestens einen Sensor (110) ermittelt werden, eine Karte (320) zu erzeugen, die Informationen bezüglich einer Vielzahl von Objekten (331, 332, 333) umfasst,
basierend auf dem Empfangen einer Benutzerstimme über das Mikrofon (130) Informationen über eine Intensität der Benutzerstimme für jede einer Vielzahl von Richtungen zu ermitteln,
basierend auf den Informationen über die Intensität der Benutzerstimme für jede der Vielzahl von Richtungen Informationen über eine Vielzahl von Kandidatenrichtungen, aus denen die Benutzerstimme empfangen wird, aus der Vielzahl von Richtungen zu ermitteln, **dadurch gekennzeichnet, dass** die eine oder die mehreren Anweisungen den Roboter (100) ferner dazu veranlassen:
über den Lautsprecher (120) Ultraschallwellen in Richtung jedes der Vielzahl von Objekten (331, 332, 333) zu erzeugen,
basierend auf reflektierten Schallsignalen, die von jedem der Objekte (331, 332, 333) reflektiert und über das Mikrofon (130) empfangen werden, Reflektivitätsinformationen bezüglich der Vielzahl von Objekten (331, 332, 333) zu ermitteln und die Reflektivitätsinformationen zu speichern, wobei die von jedem der Objekte (331, 332, 333) reflektierten Schallsignale mindestens ein Abschnitt der von jedem der Objekte (331, 332, 333) reflektierten Ultraschallwellen sind,
basierend auf einer Position des Roboters (100) und den gespeicherten Reflektivitätsinformationen Prioritätsreihenfolgeinformationen für die Vielzahl von Kandidatenrichtungen zu ermitteln, und
basierend auf den Prioritätsreihenfolgeinformationen Informationen über eine Richtung, in der die Benutzerstimme geäußert wird, aus der Vielzahl von Kandidatenrichtungen zu ermitteln.

2. Roboter (100) nach Anspruch 1, wobei die eine oder die mehreren Anweisungen, wenn sie von dem mindestens einen Prozessor (160) ausgeführt werden, den Roboter (100) ferner dazu veranlassen:
Ultraschallwellen in vorgegebenen Abstandsintervallen in Bezug auf ein Wandobjekt aus der Vielzahl von Objekten (331, 332, 333) zu erzeugen, und
basierend auf reflektierten Schallsignalen, die von dem Wandobjekt reflektiert und über das Mikrofon (130) empfangen werden, Reflektivitätsinformationen bezüglich des Wandobjekts zu ermitteln, wobei die von dem Wandobjekt reflektierten Schallsignale mindestens ein Abschnitt der in den vorgegebenen Intervallen erzeugten Ultraschallwellen sind, die von dem Wandobjekt reflektiert werden.

3. Roboter (100) nach Anspruch 2, wobei die eine oder die mehreren Anweisungen, wenn sie von dem mindestens einen Prozessor (160) ausgeführt werden, den Roboter (100) ferner dazu veranlassen:
Ultraschallwellen aus zwei oder mehr Richtungen in Richtung eines Objekts aus der Vielzahl von Objekten (331, 332, 333), das nicht das Wandobjekt ist, zu erzeugen, und
Reflektivitätsinformationen bezüglich des Objekts durch Ermitteln eines Durchschnittswerts von reflektierten Schallsignalen, die von dem Objekt reflektiert und über das Mikrofon (130) empfangen werden, zu ermitteln, wobei die von dem Objekt reflektierten Schallsignale mindestens ein Abschnitt der aus den zwei oder mehr Richtungen erzeugten Ultraschallwellen sind, der von dem Objekt reflektiert wird.

4. Roboter (100) nach Anspruch 1, wobei die eine oder die mehreren Anweisungen, wenn sie von dem mindestens einen Prozessor (160) ausgeführt werden, den Roboter (100) ferner dazu veranlassen:
basierend auf der Position des Roboters (100) die Informationen über die Intensität der Benutzerstimme für jede der Vielzahl von Richtungen zu ermitteln, und
als die Vielzahl von Kandidatenrichtungen eine vorgegebene Anzahl von Richtungen aus der Vielzahl von Richtungen zu identifizieren, in denen die jeweilige Intensität der Benutzerstimme einen vorgegebenen Schwellenwert überschreitet.

5. Roboter (100) nach Anspruch 1, wobei die eine oder die mehreren Anweisungen, wenn sie von dem mindestens einen Prozessor (160) ausgeführt werden, den Roboter (100) ferner dazu veranlassen:
Objekte (331, 332, 333) aus der Vielzahl von Objekten (331, 332, 333) zu identifizieren, die in der Vielzahl von Kandidatenrichtungen relativ zu der Position des Roboters (100) positioniert sind, und
basierend auf den jeweiligen Informationen über die Intensität der Benutzerstimme, die jeder der Vielzahl von Kandidatenrichtungen entsprechen, und Reflektivitätsinformationen, die den identifizierten Objekten (331, 332, 333) entsprechen, eine Prioritätsreihenfolge in Bezug auf die Vielzahl von Kandidatenrichtungen zu identifizieren.

6. Roboter (100) nach Anspruch 5, wobei die eine oder die mehreren Anweisungen, wenn sie von dem mindestens einen Prozessor (160) ausgeführt werden, den Roboter (100) ferner dazu veranlassen:
eine korrigierte Intensität der Benutzerstimme für jede der Vielzahl von Kandidatenrichtungen durch Multiplizieren von Gewichtungswerten mit der jeweiligen Intensität der Benutzerstimme, die jeder der Vielzahl von Kandidatenrichtungen entspricht, zu ermitteln, und
basierend auf den korrigierten Intensitäten für die Vielzahl von Kandidatenrichtungen eine Prioritätsreihenfolge zu identifizieren, und
wobei die Gewichtungswerte den Reflektivitätsinformationen entsprechen, die den identifizierten Objekten (331, 332, 333) entsprechen.

7. Roboter (100) nach Anspruch 6, wobei die Gewichtungswerte und die Reflektivitätsinformationen, die den identifizierten Objekten (331, 332, 333) entsprechen, umgekehrt proportional zueinander sind.

8. Roboter (100) nach Anspruch 6, wobei für jede Kandidatenrichtung der Vielzahl von Kandidatenrichtungen die Prioritätsreihenfolge direkt proportional zur korrigierten Intensität ist, und
wobei die eine oder die mehreren Anweisungen, wenn sie von dem mindestens einen Prozessor (160) ausgeführt werden, den Roboter (100) ferner dazu veranlassen:
eine Kandidatenrichtung mit einer höchsten Prioritätsreihenfolge aus der Vielzahl von Kandidatenrichtungen als die Richtung zu identifizieren, in der die Benutzerstimme geäußert wird.

9. Roboter (100) nach Anspruch 1, wobei die eine oder die mehreren Anweisungen, wenn sie von dem mindestens einen Prozessor (160) ausgeführt werden, den Roboter (100) ferner dazu veranlassen:
durch Durchführen einer Strahlformung in der Richtung, in der die Benutzerstimme geäußert wird, eine Spracherkennung an der Benutzerstimme durchzuführen.

10. Verfahren zum Steuern eines Roboters (100), wobei das Verfahren Folgendes umfasst:
Erzeugen einer Karte, die Informationen bezüglich einer Vielzahl von Objekten (331, 332, 333) umfasst, basierend auf Erfassungsinformationen, die über mindestens einen Sensor (110) des Roboters (100) ermittelt werden;
basierend darauf, dass eine Benutzerstimme über das Mikrofon (130) empfangen wird, Ermitteln von Informationen über eine Intensität der Benutzerstimme für jede einer Vielzahl von Richtungen;
Ermitteln von Informationen über eine Vielzahl von Kandidatenrichtungen, aus denen die Benutzerstimme empfangen wird, aus der Vielzahl von Richtungen basierend auf den Informationen über die Intensität der Benutzerstimme für jede der Vielzahl von Richtungen;
wobei das Verfahren **dadurch gekennzeichnet ist, dass** es ferner Folgendes umfasst:
Erzeugen von Ultraschallwellen in Richtung jedes der Vielzahl von Objekten (331, 332, 333) über einen Lautsprecher (120) des Roboters (100),
Ermitteln von Reflektivitätsinformationen bezüglich der Vielzahl von Objekten (331, 332, 333) basierend auf den reflektierten Schallsignalen, die von jedem der Objekte (331, 332, 333) reflektiert und von einem Mikrofon (130) des Roboters (100) empfangen werden, und Speichern der Reflektivitätsinformationen, wobei die von jedem der Objekte (331, 332, 333) reflektierten Schallsignale mindestens ein Abschnitt der von jedem der Objekte (331, 332, 333) reflektierten Ultraschallwellen sind;
Ermitteln von Prioritätsreihenfolgeinformationen für die Vielzahl von Kandidatenrichtungen basierend auf einer Position des Roboters (100) und den gespeicherten Reflektivitätsinformationen; und
Ermitteln von Informationen über eine Richtung, in der die Benutzerstimme geäußert wird, aus der Vielzahl von Kandidatenrichtungen basierend auf den Prioritätsreihenfolgeinformationen.

11. Verfahren nach Anspruch 10, wobei das Erzeugen von Ultraschallwellen in Richtung jedes der Vielzahl von Objekten (331, 332, 333) das Erzeugen von Ultraschallwellen in vorgegebenen Abstandsintervallen in Bezug auf ein Wandobjekt aus der Vielzahl von Objekten (331, 332, 333) umfasst, und
wobei das Ermitteln der Reflektivitätsinformationen das Ermitteln von Reflektivitätsinformationen bezüglich des Wandobjekts basierend auf reflektierten Schallsignalen umfasst, die von dem Wandobjekt reflektiert und über das Mikrofon (130) empfangen werden, wobei die von dem Wandobjekt reflektierten Schallsignale mindestens ein Abschnitt der in den vorgegebenen Intervallen erzeugten Ultraschallwellen sind, die von dem Wandobjekt reflektiert werden.

12. Verfahren nach Anspruch 11, wobei das Erzeugen von Ultraschallwellen in Richtung jedes der Vielzahl von Objekten (331, 332, 333) das Erzeugen von Ultraschallwellen aus zwei oder mehr Richtungen in Richtung eines Objekts aus der Vielzahl von Objekten (331, 332, 333), das nicht das Wandobjekt ist, umfasst, und
wobei das Ermitteln der Reflektivitätsinformationen ferner das Ermitteln von Reflektivitätsinformationen in Bezug auf das Objekt durch Ermitteln eines Durchschnittswerts der reflektierten Schallsignale umfasst, die von dem Objekt reflektiert und über das Mikrofon (130) empfangen werden, wobei die von dem Objekt reflektierten Schallsignale mindestens ein Abschnitt der aus den zwei oder mehr Richtungen erzeugten Ultraschallwellen sind, der von dem Objekt reflektiert wird.

13. Verfahren nach Anspruch 10, wobei das Ermitteln von Informationen über die Vielzahl von Kandidatenrichtungen Folgendes umfasst:
Identifizieren einer vorgegebenen Anzahl von Richtungen aus der Vielzahl von Richtungen, in denen die jeweilige Intensität der Benutzerstimme einen vorgegebenen Schwellenwert überschreitet, als die Vielzahl von Kandidatenrichtungen.

14. Verfahren nach Anspruch 10, wobei das Ermitteln der Prioritätsreihenfolgeinformationen Folgendes umfasst:
Identifizieren von Objekten (331, 332, 333) aus der Vielzahl von Objekten (331, 332, 333), die in der Vielzahl von Kandidatenrichtungen relativ zu der Position des Roboters (100) positioniert sind; und
Identifizieren einer Prioritätsreihenfolge in Bezug auf die Vielzahl von Kandidatenrichtungen basierend auf den jeweiligen Informationen über die Intensität der Benutzerstimme, die jeder der Vielzahl von Kandidatenrichtungen entsprechen, und Reflektivitätsinformationen, die den identifizierten Objekten (331, 332, 333) entsprechen.

15. Verfahren nach Anspruch 14, wobei das Ermitteln von Prioritätsreihenfolgeinformationen Folgendes umfasst:
Ermitteln einer korrigierten Intensität der Benutzerstimme für jede der Vielzahl von Kandidatenrichtungen durch Multiplizieren von Gewichtungswerten mit der jeweiligen Intensität der Benutzerstimme, die jeder der Vielzahl von Kandidatenrichtungen entspricht; und
Identifizieren einer Prioritätsreihenfolge basierend auf den korrigierten Intensitäten für die Vielzahl von Kandidatenrichtungen, und
wobei die Gewichtungswerte den Reflektivitätsinformationen entsprechen, die den identifizierten Objekten (331, 332, 333) entsprechen.

## Revendications

1. Robot (100), comprenant :
au moins un capteur (110) ;
un haut-parleur (120) ;
un microphone (130) ;
un dispositif d'entraînement (140) ;
au moins une mémoire (150) stockant une ou plusieurs instructions ; et
au moins un processeur (160) configuré pour exécuter l'une ou les plusieurs instructions,
dans lequel l'une ou les plusieurs instructions, lorsqu'elles sont exécutées par l'au moins un processeur (160), amènent le robot (100) à :
générer une carte (320) comprenant des informations concernant une pluralité d'objets (331, 332, 333) en se basant sur des informations de détection obtenues par l'intermédiaire de l'au moins un capteur (110),
en se basant sur la réception d'une voix d'utilisateur par l'intermédiaire du microphone (130), obtenir des informations sur une intensité de la voix d'utilisateur pour chacune d'une pluralité de directions,
obtenir des informations sur une pluralité de directions candidates à partir desquelles la voix d'utilisateur est reçue parmi la pluralité de directions en se basant sur les informations sur l'intensité de la voix d'utilisateur pour chacune de la pluralité de directions, **caractérisé en ce que** l'une ou les plusieurs instructions amènent en outre le robot (100) à :
générer des ondes ultrasonores en direction de chacun de la pluralité d'objets (331, 332, 333) par l'intermédiaire du haut-parleur (120),
obtenir des informations de réflectivité concernant la pluralité d'objets (331, 332, 333) en se basant sur des sons réfléchis par chacun des objets (331, 332, 333) et reçus par l'intermédiaire du microphone (130), et stocker les informations de réflectivité, les sons réfléchis par chacun des objets (331, 332, 333) étant au moins une partie des ondes ultrasonores réfléchies par chacun des objets (331, 332, 333),
obtenir des informations d'ordre de priorité pour la pluralité de directions candidates en se basant sur une position du robot (100) et les informations de réflectivité stockées, et
obtenir des informations sur une direction dans laquelle la voix d'utilisateur est prononcée parmi la pluralité de directions candidates en se basant sur les informations d'ordre de priorité.

2. Robot (100) de la revendication 1, dans lequel l'une ou les plusieurs instructions, lorsqu'elles sont exécutées par l'au moins un processeur (160), amènent en outre le robot (100) à :
générer des ondes ultrasonores à des intervalles de distance prédéfinis par rapport à un objet de type paroi parmi la pluralité d'objets (331, 332, 333), et
obtenir des informations de réflectivité concernant l'objet de type paroi en se basant sur des sons réfléchis par l'objet de type paroi et reçus par l'intermédiaire du microphone (130), les sons réfléchis par l'objet de type paroi étant au moins une partie des ondes ultrasonores générées aux intervalles prédéfinis et réfléchies par l'objet de type paroi.

3. Robot (100) de la revendication 2, dans lequel l'une ou les plusieurs instructions, lorsqu'elles sont exécutées par l'au moins un processeur (160), amènent en outre le robot (100) à :
générer des ondes ultrasonores à partir de deux directions ou plus en direction d'un objet, parmi la pluralité d'objets (331, 332, 333), autre que l'objet de type paroi, et
obtenir des informations de réflectivité concernant l'objet en obtenant une valeur moyenne de sons réfléchis qui sont réfléchis par l'objet et reçus par l'intermédiaire du microphone (130), les sons réfléchis par l'objet étant au moins une partie des ondes ultrasonores générées à partir des deux directions ou plus qui est réfléchie par l'objet.

4. Robot (100) de la revendication 1, dans lequel l'une ou les plusieurs instructions, lorsqu'elles sont exécutées par l'au moins un processeur (160), amènent en outre le robot (100) à :
obtenir les informations sur l'intensité de la voix d'utilisateur pour chacune de la pluralité de directions en se basant sur la position du robot (100), et
identifier, en tant que pluralité de directions candidates, un nombre prédéfini de directions parmi la pluralité de directions dans lesquelles l'intensité respective de la voix d'utilisateur dépasse un seuil prédéterminé.

5. Robot (100) de la revendication 1, dans lequel l'une ou les plusieurs instructions, lorsqu'elles sont exécutées par l'au moins un processeur (160), amènent en outre le robot (100) à :
identifier des objets (331, 332, 333), parmi la pluralité d'objets (331, 332, 333), positionnés dans la pluralité de directions candidates par rapport à la position du robot (100), et
identifier un ordre de priorité par rapport à la pluralité de directions candidates en se basant sur les informations respectives sur l'intensité de la voix d'utilisateur correspondant à chacune de la pluralité de directions candidates et sur des informations de réflectivité correspondant aux objets identifiés (331, 332, 333).

6. Robot (100) de la revendication 5, dans lequel l'une ou les plusieurs instructions, lorsqu'elles sont exécutées par l'au moins un processeur (160), amènent en outre le robot (100) à :
obtenir une intensité corrigée de la voix d'utilisateur pour chacune de la pluralité de directions candidates en multipliant l'intensité respective de la voix d'utilisateur correspondant à chacune de la pluralité de directions candidates par des valeurs de pondération, et
identifier un ordre de priorité en se basant sur les intensités corrigées pour la pluralité de directions candidates, et
dans lequel les valeurs de pondération correspondent aux informations de réflectivité correspondant aux objets identifiés (331, 332, 333).

7. Robot (100) de la revendication 6, dans lequel les valeurs de pondération et les informations de réflectivité correspondant aux objets identifiés (331, 332, 333) sont inversement proportionnelles les unes aux autres.

8. Robot (100) de la revendication 6, dans lequel, pour chaque direction candidate de la pluralité de directions candidates, l'ordre de priorité est directement proportionnel à l'intensité corrigée, et
dans lequel l'une ou les plusieurs instructions, lorsqu'elles sont exécutées par l'au moins un processeur (160), amènent en outre le robot (100) à :
identifier une direction candidate ayant un ordre de priorité le plus élevé parmi la pluralité de directions candidates en tant que direction dans laquelle la voix d'utilisateur est prononcée.

9. Robot (100) de la revendication 1, dans lequel l'une ou les plusieurs instructions, lorsqu'elles sont exécutées par l'au moins un processeur (160), amènent en outre le robot (100) à :
effectuer une reconnaissance vocale sur la voix d'utilisateur en effectuant une formation de faisceau dans la direction dans laquelle la voix d'utilisateur est prononcée.

10. Procédé de commande d'un robot (100), le procédé comprenant :
générer une carte comprenant des informations concernant une pluralité d'objets (331, 332, 333) en se basant sur des informations de détection obtenues par l'intermédiaire d'au moins un capteur (110) du robot (100) ;
en se basant sur la réception d'une voix d'utilisateur par l'intermédiaire du microphone (130), obtenir des informations sur une intensité de la voix d'utilisateur pour chacune d'une pluralité de directions ;
obtenir des informations sur une pluralité de directions candidates à partir desquelles la voix d'utilisateur est reçue parmi la pluralité de directions en se basant sur les informations sur l'intensité de la voix d'utilisateur pour chacune de la pluralité de directions ;
le procédé étant **caractérisé en ce qu'**il comprend en outre :
générer des ondes ultrasonores en direction de chacun de la pluralité d'objets (331, 332, 333) par l'intermédiaire d'un haut-parleur (120) du robot (100),
obtenir des informations de réflectivité concernant la pluralité d'objets (331, 332, 333) en se basant sur les sons réfléchis par chacun des objets (331, 332, 333) et reçus par un microphone (130) du robot (100), et stocker les informations de réflectivité, les sons réfléchis par chacun des objets (331, 332, 333) étant au moins une partie des ondes ultrasonores réfléchies par chacun des objets (331, 332, 333) ;
obtenir des informations d'ordre de priorité pour la pluralité de directions candidates en se basant sur une position du robot (100) et les informations de réflectivité stockées ; et
obtenir des informations sur une direction dans laquelle la voix d'utilisateur est prononcée parmi la pluralité de directions candidates en se basant sur les informations d'ordre de priorité.

11. Procédé de la revendication 10, dans lequel la génération d'ondes ultrasonores en direction de chacun de la pluralité d'objets (331, 332, 333) comprend la génération d'ondes ultrasonores à des intervalles de distance prédéfinis par rapport à un objet de type paroi parmi la pluralité d'objets (331, 332, 333), et
dans lequel l'obtention des informations de réflectivité comprend l'obtention d'informations de réflectivité concernant l'objet de type paroi en se basant sur des sons réfléchis par l'objet de type paroi et reçus par l'intermédiaire du microphone (130), les sons réfléchis par l'objet de type paroi étant au moins une partie des ondes ultrasonores générées aux intervalles prédéfinis et réfléchies par l'objet de type paroi.

12. Procédé de la revendication 11, dans lequel la génération d'ondes ultrasonores en direction de chacun de la pluralité d'objets (331, 332, 333) comprend la génération d'ondes ultrasonores à partir de deux directions ou plus en direction d'un objet, parmi la pluralité d'objets (331, 332, 333), autre que l'objet de type paroi, et
dans lequel l'obtention des informations de réflectivité comprend en outre l'obtention d'informations de réflectivité par rapport à l'objet en obtenant une valeur moyenne des sons réfléchis par l'objet et reçus par l'intermédiaire du microphone (130), les sons réfléchis par l'objet étant au moins une partie des ondes ultrasonores générées à partir des deux directions ou plus et réfléchies par l'objet.

13. Procédé de la revendication 10, dans lequel l'obtention d'informations sur la pluralité de directions candidates comprend :
identifier, en tant que pluralité de directions candidates, un nombre prédéfini de directions parmi la pluralité de directions dans lesquelles l'intensité respective de la voix d'utilisateur dépasse un seuil prédéterminé.

14. Procédé de la revendication 10, dans lequel l'obtention des informations d'ordre de priorité comprend :
identifier des objets (331, 332, 333), parmi la pluralité d'objets (331, 332, 333), positionnés dans la pluralité de directions candidates par rapport à la position du robot (100) ; et
identifier un ordre de priorité par rapport à la pluralité de directions candidates en se basant sur les informations respectives sur l'intensité de la voix d'utilisateur correspondant à chacune de la pluralité de directions candidates et sur des informations de réflectivité correspondant aux objets identifiés (331, 332, 333).

15. Procédé de la revendication 14, dans lequel l'obtention d'informations d'ordre de priorité comprend :
obtenir une intensité corrigée de la voix d'utilisateur pour chacune de la pluralité de directions candidates en multipliant l'intensité respective de la voix d'utilisateur correspondant à chacune de la pluralité de directions candidates par des valeurs de pondération ; et
identifier un ordre de priorité en se basant sur les intensités corrigées pour la pluralité de directions candidates, et
dans lequel les valeurs de pondération correspondent aux informations de réflectivité correspondant aux objets identifiés (331, 332, 333).
